# EUROPÄISCHE PATENTSCHRIFT

(11) **EP 1 195 548 B1**
(45) Veröffentlichungstag und Bekanntmachung des Hinweises auf die Patenterteilung: **12.01.2005**
(21) Anmeldenummer: 01118186.4
(22) Anmeldetag: 27.07.2001
(51) Int. Cl.: F16L 3/10

(54) **Rohrschelle**
Pipe clamp
Collier de serrage

(30) Priorität: 07.10.2000 DE 20017277 U
(43) Veröffentlichungstag der Anmeldung: 10.04.2002
(73) Patentinhaber: SW Stanzwerk Glarus AG, 8750 Glarus (CH)
(72) Erfinder: Hagemann, Ludbert, 91608 Geslau (DE)
(74) Vertreter: Jochem, Bernd , Dipl.-Wirtsch.-Ing

(56) Entgegenhaltungen:
- DE-A- 4 015 404

## Beschreibung

Die Erfindung betrifft eine Rohrschelle, bestehend aus zwei im wesentlichen halbringförmigen Schalen, die wenigstens an einem Ende Flansche aufweisen und über die Flansche und eine Schraube zu verspannen sind, wobei einer der Flanschen einen in einer Seitenwand mündenden Einschnitt zur Aufnahme des Schafts der Schraube in der Spannstellung aufweist, und wobei auf dem Flansch mit Einschnitt ein Sicherungsschuh mit einem entsprechend angeordneten Einschnitt sitzt, der sich in Richtung von seinem offenen Ende zu dem von dem Schraubenschaft in der Spannstellung eingenommenen Querschnittsbereich hin verengt.

Eine derartige Rohrschelle ist z. B. aus der DE-4 015 404-A bekannt. Sie erlaubt es, die beiden halbringförmigen Schalen wenigstens auf einer Seite durch Relativbewegung quer zu dem einzuspannenden Rohr in die Schließund Spannstellung zu bringen. Normalerweise könnte sich dann jedoch die Rohrschelle je nach Lage und angreifenden Kräften mehr oder weniger leicht wieder öffnen, bevor die Schraube angezogen worden ist, weil der bekannte Sicherungsschuh nur das axiale Zurückziehen der Schraube aus dem Flansch, nicht aber ihre Bewegung längs des Einschnitts im Flansch verhindert.

Der Erfindung liegt daher die Aufgabe zugrunde, eine Rohrschelle der eingangs genannten Art zu schaffen, die in der vormontierten Stellung, auch schon vor dem Anziehen der Spannschraube, zuverlässig geschlossen bleibt, ohne daß es dafür auf eine ganz bestimmte, von Anfang an vorhandene Einschraubtiefe der Spannschraube ankommt.

Vorstehende Aufgabe wird erfindungsgemäß dadurch gelöst, daß der Sicherungsschuh aus Kunststoff besteht und sich sein Einschnitt auf eine Breite verengt, die kleiner als der Durchmesser des Schraubenschafts ist aber bei dessen Durchtritt elastisch aufweitbar ist.

Die vorteilhafte Wirkung der Erfindung beruht darauf, daß die den gefügten Zustand sichernden Elemente nicht am Schraubenkopf, sondern am Schraubenschaft angreifen. Sie sind deshalb auf jeden Fall sofort nach dem Fügen wirksam, unabhängig davon, wie weit der Schraubenkopf von seinem Minimalabstand vom benachbarten Flansch entfernt ist. Der Installateur braucht nicht darauf zu achten, ob während des Ausrichtens eines Rohrs in einer Vielzahl von lose geschlossenen Rohrschellen überall eine ausreichende elastische Verspannung vorhanden ist, die ein Hintergreifen der Schraubenköpfe gewährleistet. Ein Rohr läßt sich ohnehin besser ausrichten und gegebenenfalls noch verschieben, wenn es nicht verspannt, sondern verhältnismäßig lose in den zwar geschlossenen, aber noch nicht festgezogenen Rohrschellen gehalten ist.

In der bevorzugten praktischen Ausführung der Erfindung befindet sich die schmalste Stelle des Einschnitts unmittelbar vor dem vom Schraubenschaft in der Spannstellung eingenommenen Querschnittsbereich. Dadurch, daß nach dem losen Fügen nicht nur die Schließstellung der Rohrschelle gewahrt, sondern von Anfang an die Spannstellung eingehalten wird, sind Lagekorrekturen beim Festziehen der Schrauben nicht erforderlich.

Die Gestaltung des Sicherungsschuhs gestattet zahlreiche unterschiedliche Ausführungen. Als besonders zweckmäßig hat sich ein Schuh erwiesen, der zwei am Rand miteinander verbundene, flache Lagen aufweist, die im montierten Zustand an der Ober- bzw. Unterseite des Flanschs anliegen, und der auf den Flansch aufsteckbar ist. Vorzugsweise sind die beiden Lagen des Schuhs an den gegenüberliegenden seitlichen Rändern miteinander verbunden. Alternativ kann es im Einzelfall aber auch genügen, wenn die beiden Lagen nur an einem seitlichen Rand miteinander verbunden sind. Auch eine Verbindung an der radial äußeren Kante, gegebenenfalls zusätzlich zu einer Verbindung an wenigstens einem der seitlichen Ränder kommt in Frage. Für die erfindungsgemäß angestrebte Funktion kann es grundsätzlich auch genügen, wenn der Sicherungsschuh nur eine einzige flache Lage mit einem sich von außen nach innen verjüngenden Einschnitt aufweist, die am Flansch z. B. durch Kleben oder Schweißen oder alternativ mittels einer den Flanschrand ergreifenden Führung oder Klammer zu befestigen ist.

Wenn der Sicherungsschuh lösbar mit dem Flansch verbunden wird, empfiehlt es sich, daß er in der Montagestellung am Flansch einrastet. Zu diesem Zweck kann ein mit Bezug auf den Flansch radial aufsteckbarer Schuh an seiner radial inneren Randkante einen elastisch auslenkbaren Haken aufweisen, der an der radial inneren Randkante des Flanschs einrastbar ist.

Wenn der Sicherungsschuh zwei miteinander verbundene Lagen aufweist, sollte zweckmäßigerweise die an der Unterseite des Flanschs anliegende, d. h. zwischen den beiden Flanschen einzuspannende Lage mit dem auf eine Breite von weniger als der Durchmesser des Schraubenschafts verengten Einschnitt versehen sein. Weil dies für die angestrebte Halte- bzw. Sicherungsfunktion genügt, kann die an der Oberseite des Flanschs anliegende Lage des Sicherungsschuhs einen Einschnitt haben, der breiter ist als die größte Querabmessung des Schraubenkopfs, so daß die obere Lage beim Anziehen der Schraube in keiner Richtung belastet wird.

Ein Ausführungsbeispiel der Erfindung wird nachstehend anhand der Zeichnung näher erläutert. Es zeigen:
- Fig. 1: eine Draufsicht auf einen Sicherungsschuh, der auf einem Flansch einer strichpunktiert angedeuteten Halbschale einer Rohrschelle sitzt;
- Fig. 2: eine Seitenansicht des Sicherungsschuhs mit Bezug auf Fig. 1 von links;
- Fig. 3: eine Seitenansicht des Sicherungsschuhs nach Fig. 1 und 2 mit Blick auf die Öffnung des in Fig. 1 gezeigten Querschnitts;
- Fig. 4: einen Querschnitt durch den Sicherungsschuh nach Schnittlinie B-B in Fig. 1 und
- Fig. 5: einen Querschnitt durch den Sicherungsschuh nach Schnittlinie A-A in Fig. 4.

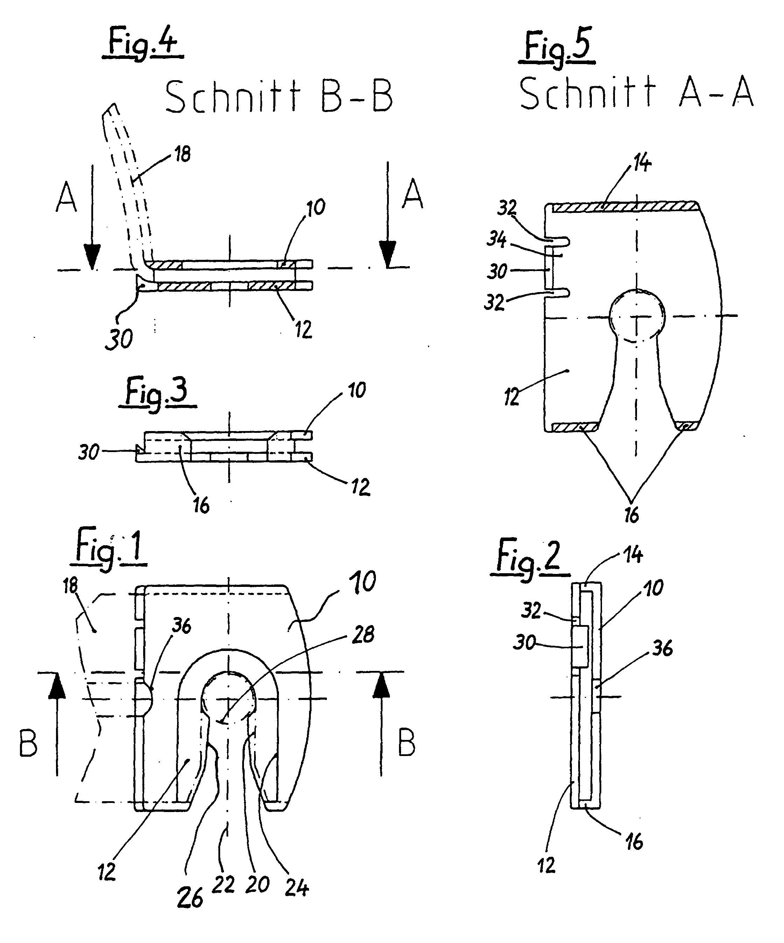

Der in der Zeichnung dargestellte Sicherungsschuh besteht aus zwei mit Zwischenabstand angeordneten Lagen aus Kunststoff, die im Ausführungsbeispiel einstückig hergestellt und an den seitlichen Rändern miteinander verbunden sind. Die obere Lage ist in der Zeichnung mit 10 und die untere Lage mit 12 bezeichnet. Die seitlichen Randstege, die die beiden Lagen 10, 12 miteinander verbinden, sind mit 14 und 16 gekennzeichnet. Ihre Höhe entspricht der Dicke des Flanschs der strichpunktiert angedeuteten Schalenhälfte 18 einer Rohrschelle. Dieser Flansch hat gemäß Fig. 1 einen strichpunktiert gezeigten Einschnitt 20, der zu seiner einen Seitenkante hin offen ist. In der in Fig. 1 und 4 gezeigten montierten Stellung deckt sich die Mittellinie 22 des Einschnitts 20 mit der Mittellinie eines Einschnitts 24 in der oberen Lage 10 und mit der Mittellinie eines Einschnitts 26 in der unteren Lage 12 des Sicherungsschuhs. Der Einschnitt 24 ist wesentlich breiter und länger als der Einschnitt 20 im Flansch, so daß ein mit Bezug auf Fig. 4 von oben niedergeschraubter Schraubenkopf nicht auf der oberen Lage 10 des Sicherungsschuhs, sondern auf dem metallischen Flansch der Rohrschelle zur Anlage kommt. In der Spannstellung befindet sich der in Fig. 1 strichpunktiert angedeutete Schraubenschaft 28 ganz am Ende des auch an der engsten Stelle etwas breiter als dieser ausgebildeten Einschnitts 20.

Der Einschnitt 26 in der unteren Lage 12 ist etwas schmaler als der Einschnitt 20. An der seitlichen Öffnung ist seine Breite wesentlich größer als der Durchmesser des Schraubenschafts, um dessen Einführung zu erleichtern. Zu dem vom Schraubenschaft 28 in der Spannstellung eingenommenen Querschnittsbereich hin verringert sich die Breite des Einschnitts 26 kontinuierlich, wobei die seitlichen Ränder des Einschnitts zunächst stärker, dann schwächer konvergieren. Die engste Stelle des Einschnitts 26, die schmaler ist als der Durchmesser des Schraubenschafts 28, passiert dieser beim Einführen in den Einschnitt 20 unmittelbar bevor die in Fig. 1 gezeigte Spannstellung erreicht wird. Bei dem Einführvorgang drängt der Schraubenschaft 28 das elastische Material der unteren Lage 12 des Sicherungsschuhs an den seitlichen Randkanten des Einschnitts 26 mit Bezug auf das in der Rohrschelle 18 eingespannte Rohr radial nach innen bzw. radial nach außen zurück. Infolge der Materialelastizität des Kunststoffs nehmen danach die Randkanten des Einschnitts 26 jedoch wieder die in Fig. 1 gezeigte Lage ein, in der sie durch die Verengung verhindern, daß sich der Schraubenschaft 28 im Einschnitt 20 unbeabsichtigt wieder nach außen bewegt.

Nach dem Schließen der Rohrschelle wird der Sicherungsschuh durch den hindurchtretenden Schraubenschaft 28 auf dem Flansch der Halbschale 18 der Rohrschelle gehalten. Um auch schon vorher beim Transport und dem anfänglichen Montagevorgang einen zuverlässigen Sitz des Sicherungsschuhs auf dem Flansch zu gewährleisten, ist an der mit Bezug auf das einzuspannende Rohr radial inneren Randkante der unteren Lage 12 des Sicherungsschuhs ein Rastzahn 30 angeformt, der beim Aufschieben des Sicherungsschuhs auf das radial äußere Ende des Flanschs mit Bezug auf Fig. 4 nach unten elastisch ausgelenkt wird und dann, wenn die in der Zeichnung gezeigte, vollständig aufgeschobene Lage erreicht wird, hinter der radial inneren Randkante des Flanschs nach oben zurückfedert, also einrastet. Um die Elastizität des Rastzahns 30 zu verbessern, bildet er das freie Ende einer seitlich durch Einschnitte 32 begrenzten Zunge 34.

In Anpassung an die Form der Halbschale 18 der Rohrschelle steht die untere Lage 12 des Sicherungsschuhs in Richtung nach radial innen gegenüber der oberen Lage 10 etwas vor, so daß dann, wenn gemäß Fig. 4 die obere Lage bis zum Übergang des flachen Flanschs in den ringförmigen Teil der Halbschale 18 vorgeschoben worden ist, der Rastzahn 30 hinter der radial inneren unteren Randkante des Flanschs einrasten kann. Ebenfalls zur Anpassung des Sicherungsschuhs an die vorgegebene Form der Rohrschelle, deren ringförmiger Bügel im vorliegenden Fall im axial mittleren Bereich eine ausgewölbte Versteifungssicke aufweist, ist im mittleren Bereich der radial inneren Randkante der oberen Lage 10 eine der Form und Größe der Sicke entsprechende Aussparung 36 vorgesehen. Die mit Bezug auf die Mittellängsachse des einzuspannenden Rohrs radial äußeren Randkanten der oberen Lage 10 und der unteren Lage 12 haben bei dem gezeigten Ausführungsbeispiel eine der Gestalt des Flansches angepaßte, gerundete Form, so daß sie im montierten Zustand bündig liegen mit der radial äußeren Randkante des Flansches.

## Patentansprüche

1. Rohrschelle, bestehend aus zwei im wesentlichen halbringförmigen Schalen (18), die wenigstens an einem Ende Flansche aufweisen und über die Flansche und eine Schraube (28) zu verspannen sind, wobei einer der Flanschen einen in einer Seitenwand mündenden Einschnitt (20) zur Aufnahme des Schafts (28) der Schraube in der Spannstellung aufweist, und wobei auf dem Flansch mit Einschnitt (20) ein Sicherungsschuh (10-16) mit einem entsprechend angeordneten Einschnitt (26) sitzt, der sich in Richtung von seinem offenen Ende zu dem von dem Schraubenschaft (28) in der Spannstellung eingenommenen Querschnittsbereich hin verengt, **dadurch gekennzeichnet, dass** der Sicherungsschuh aus Kunststoff besteht und sich sein Einschnitt auf eine Breite verengt, die kleiner als der Durchmesser des Schraubenschafts (28) ist, aber bei dessen Durchtritt elastisch aufweitbar ist.

2. Rohrschelle nach Anspruch 1, **dadurch gekennzeichnet,** da**ß** sich die schmalste Stelle des Einschnitts (26) unmittelbar vor dem vom Schraubenschaft (28) in der Spannstellung eingenommenen Querschnittsbereich befindet.

3. Rohrschelle nach Anspruch 1 oder 2, **dadurch gekennzeichnet,** da**ß** der Sicherungsschuh zwei am Rand miteinander verbundene flache Lagen (10, 12) aufweist, die im montierten Zustand an der Ober- bzw. Unterseite des Flanschs anliegen, und auf den Flansch aufsteckbar ist.

4. Rohrschelle nach Anspruch 3, **dadurch gekennzeichnet,** da**ß** die beiden Lagen (10, 12) des Sicherungsschuhs an den gegenüberliegenden seitlichen Rändern miteinander verbunden sind.

5. Rohrschelle nach Anspruch 3, **dadurch gekennzeichnet, daß** die beiden Lagen (10, 12) des Sicherungsschuhs nur an einem seitlichen Rand miteinander verbunden sind.

6. Rohrschelle nach Anspruch 3, **dadurch gekennzeichnet,** da**ß** die beiden Lagen (10, 12) des Sicherungsschuhs an der radial äußeren Kante miteinander verbunden sind.

7. Rohrschelle nach einem der Ansprüche 1 bis 6, **dadurch gekennzeichnet,** da**ß** der Sicherungsschuh in der Montagestellung am Flansch eingerastet ist.

8. Rohrschelle nach Anspruch 7, **dadurch gekennzeichnet,** da**ß** der Sicherungsschuh an seiner radial inneren Randkante einen elastisch auslenkbaren Rastzahn (30) aufweist, der an der radial inneren Randkante des Flanschs einrastbar ist.

9. Rohrschelle nach einem der Ansprüche 3 bis 8, **dadurch gekennzeichnet,** da**ß** die an der Unterseite des Flanschs anliegende Lage (12) des Sicherungsschuhs den auf eine Breite von weniger als der Durchmesser des Schraubenschafts (28) verengten Einschnitt (26) aufweist.

10. Rohrschelle nach einem der Ansprüche 3 bis 9, **dadurch gekennzeichnet,** da**ß** die an der Oberseite des Flanschs anliegende Lage (10) des Sicherungsschuhs einen Einschnitt (24) hat, der breiter ist als die größte Querabmessung des Schraubenkopfs.

## Claims

1. A pipe clamp, comprising two substantially semi-annular shells (18) which have flanges at at least one end and which are to be braced via the flanges and a screw (28), wherein one of the flanges has an indentation (20) opening into a side wall to receive the shank (28) of the screw in the clamping position, and wherein a retaining shoe (10-16) with a correspondingly arranged indentation (26) is mounted on the flange with the indentation (20), which indentation (26) narrows in the direction of its open end towards the cross-sectional zone occupied by the screw shank (28) in the clamping position, **characterised in that** the retaining shoe consists of plastics material and its indentation (26) narrows to a width which is smaller than the diameter of the screw shank (28) but can be elastically expanded upon its passing therethrough.

2. A pipe clamp according to Claim 1, **characterised in that** the narrowest location of the indentation (26) is situated immediately in front of the cross-sectional zone occupied by the screw shank (28) in the clamping position.

3. A pipe clamp according to Claim 1 or 2, **characterised in that** the retaining shoe has two flat layers (10,12) which are joined together at the edge and which in the assembled condition abut against the upper side and underside of the flange respectively, and that it can be fitted on to the flange.

4. A pipe clamp according to Claim 3, **characterised in that** the two layers (10,12) of the retaining shoe are joined together at the opposite lateral edges.

5. A pipe clamp according to Claim 3, **characterised in that** the two layers (10,12) of the retaining shoe are joined together only at one lateral edge.

6. A pipe clamp according to Claim 3, **characterised in that** the two layers (10,12) of the retaining shoe are joined together at the radially outer edge.

7. A pipe clamp according to any one of Claims 1 to 6, **characterised in that** in the installed position the retaining shoe is engaged in the flange.

8. A pipe clamp according to Claim 7, **characterised in that** on its radially inner edge the retaining shoe has an elastically deflectable detent tooth (30) which can be engaged on the radially inner edge of the flange.

9. A pipe clamp according to any one of Claims 3 to 8, **characterised in that** the layer (12) of the retaining shoe adjoining the underside of the flange has the identation (26) narrowed to a width of less than the diameter of the screw shank (28).

10. A pipe clamp according to any one of Claims 3 to 9, **characterised in that** the layer (10) of the retaining shoe adjoining the upper side of the flange has an indentation (24) which is wider than the maximum lateral dimension of the screw head.

## Revendications

1. Collier de serrage, se composant de deux coquilles sensiblement semi-annulaires (18), qui présentent des brides à au moins une extrémité et qui sont serrées par les brides et une vis (28) de telle façon qu'une des brides présente une encoche (20) débouchant dans une paroi latérale en vue de recevoir la tige (28) de la vis dans la position de serrage et dans lequel, sur la bride avec l'encoche (20), est appliqué un sabot de retenue (10-16) avec une encoche (26) disposée de façon correspondante qui se rétrécit à partir de son extrémité ouverte en direction de la région de la section transversale occupée par la tige de vis (28) dans la position de serrage,
**caractérisé en ce que**
le sabot de retenue est composé de matière plastique et son encoche (26) se rétrécit à une largeur plus petite que le diamètre de la tige de vis (28) mais qui peut s'élargir lors du passage de celle-ci.

2. Collier de serrage selon la revendication 1,
**caractérisé en ce que**
le point le plus étroit de l'encoche (26) se trouve immédiatement avant la région de la section transversale occupée par la tige de vis (28) dans la position de serrage.

3. Collier de serrage selon la revendication 1 ou 2,
**caractérisé en ce que**
le sabot de retenue présente deux couches plates (10, 12) assemblées au bord l'une à l'autre, qui à l'état monté sont appliquées sur la face supérieure et inférieure de la bride, et peut être engagé sur la bride.

4. Collier de serrage selon la revendication 3,
**caractérisé en ce que**
les deux couches (10, 12) du sabot de retenue sont assemblées l'une à l'autre sur les bords latéraux opposés.

5. Collier de serrage selon la revendication 3,
**caractérisé en ce que**
les deux couches (10, 12) du sabot de retenue ne sont assemblées l'une à l'autre que sur un seul bord latéral.

6. Collier de serrage selon la revendication 3,
**caractérisé en ce que**
les deux couches (10, 12) du sabot de retenue sont assemblées l'une à l'autre sur l'arête radialement extérieure.

7. Collier de serrage selon l'une quelconque des revendications 1 à 6,
**caractérisé en ce que**
le sabot de retenue est encliqueté sur la bride en position de montage.

8. Collier de serrage selon la revendication 7,
**caractérisé en ce que**
le sabot de retenue comporte sur son arête de bord radialement intérieure une dent d'encliquetage extensible élastiquement (30), qui peut être encliquetée sur l'arête de bord radialement intérieure de la bride.

9. Collier de serrage selon l'une quelconque des revendications 3 à 8,
**caractérisé en ce que**
la couche (12) du sabot de retenue appliquée sur la face inférieure de la bride présente l'encoche (26) rétrécie à une largeur inférieure au diamètre de la tige de vis (28).

10. Collier de serrage selon l'une quelconque des revendications 3 à 9,
**caractérisé en ce que**
la couche (10) du sabot de retenue appliquée sur la face supérieure de la bride comporte une encoche (24), qui est plus large que la plus grande dimension transversale de la tête de la vis.
